# EUROPÄISCHE PATENTSCHRIFT

(11) **EP 0 906 539 B1**
(45) Veröffentlichungstag und Bekanntmachung des Hinweises auf die Patenterteilung: **19.01.2000**
(21) Anmeldenummer: 97924851.5
(22) Anmeldetag: 16.06.1997
(51) Int. Cl.: F16L 59/18, F16L 59/16, F16L 59/02, F16L 59/10

(54) **ISOLIERUNG FÜR BAUTEILE MIT DREIDIMENSIONALEN AUSSENFLÄCHEN**
INSULATION FOR STRUCTURAL COMPONENTS HAVING THREE-DIMENSIONAL EXTERNAL SURFACES
ISOLATION POUR COMPOSANTS PRESENTANT DES SURFACES EXTERIEURES TRIDIMENSIONNELLES

(30) Priorität: 20.06.1996 CH 154396
(43) Veröffentlichungstag der Anmeldung: 07.04.1999
(73) Patentinhaber: ETIS AG, 9053 Teufen (CH)
(72) Erfinder: WIRTH, Anton, CH-9056 Gais (CH)
(74) Vertreter: Stocker, Kurt
(86) Internationale Anmeldenummer: CH9700239
(87) Internationale Veröffentlichungsnummer: WO9748943

(56) Entgegenhaltungen:
- EP-A- 0 108 856
- EP-A- 0 403 943
- EP-A- 0 676 580
- DE-A- 3 307 457
- US-A- 2 732 227
- US-A- 3 187 778

## Beschreibung

Die Erfindung bezieht sich auf Isolierungen nach dem Oberbegriff des Anspruches 1. Solche Isolierungen werden zum thermischen und akustischen Isolieren von Maschinen, Verbrennungsmotoren, insbesondere Turbolader, Auspuffleitungen, Gas- und Dampfturbinen, Leitungskompensatoren, Behältern, und dgl., an deren Oberfläche erhöhte Temperaturen und insbesondere mechanischen Schwingungen auftreten und/oder von denen Geräusche ausgehen, eingesetzt.

Im speziellen Fall umfasst die Erfindung thermische und akustische Isolierungen für Auspuffleitungen und Turbolader, wie beispielsweise für mittelschnell laufende Dieselmotoren, welche im Falle der Inspektion, Revision und im Havariefall von Hand schnell entfernt und wieder montiert werden können.

Die Isolierung von Auspuffleitungen und Turboladern hat die Aufgabe, den Wärmeverlust durch Abstrahlung und Konvektion von den heissen Teilen sowie die Schallübertragung zu reduzieren und gleichzeitig einen Berührungsschutz zu gewährleisten. Dabei ist wichtig, dass eine gleichmässige Temperaturverteilung auf dem Auspuff oder dem Turbolader erzielt wird und somit Wärmespannungen, die Gusskörper zerstören, verhindert werden. Beim Bersten des Turboladers, dessen Schaufelrad mit sehr hoher Geschwindigkeit rotiert, müsste mit sehr schweren Schäden an Leib und Gut gerechnet werden.

Die Dieselmotoren müssen sehr oft gewartet werden. Diese Tatsache bedingt, dass die Isolierung am Auspuff und am Turbolader mit wenig Aufwand von Hand innert kürzerster Zeit demontiert und wieder montiert werden kann.

Die heutigen Isoliersysteme weisen verschiedene Nachteile auf. Die haufigste Art der Auspuff- und Turboladerisolierung ist die sogenannte Kassettenisolierung. Unter einer Kassette versteht man ein Gehäuse, das aus Stahl- oder Chromstahlblech zusammen geschweisst ist, wobei die Innenseite des Gehäuses keine Abdeckung aufweist. Als Isolierung werden häufig Isolierkissen verwendet, deren Hüllen aus Glasfaserstoff bestehen und mit Isoliermatten gefüllt sind. Die Kissen werden oft durch Schweissnägel im Gehäuse befestigt und zusätzlich durch Querstreben, die auf das Innengehäuse geheftet werden, gehalten. Diese Kassettenisolierungen weisen durch die Schweissnägel und die Querstreben grosse Wärmeleiter auf, welche einerseits zu grossen Wärmeverlusten führen und anderseits die äussere Oberfläche derart aufheizen können, dass kein sogenannter Handschutz mehr gegeben ist (d.h. die Oberflächentemperatur ist grösser als 70°C). Diese metallischen Haltekonstruktionen sind auch grosse sogenannte Schallbrücken, die für die unerwünschte Schallübertragung nach aussen sehr förderlich sind.

Der wichtigste Nachteil der heutigen Kassettenisoliersysteme ist aber die Tatsache, dass die Isolierung nicht direkt auf dem Auspuff aufliegen darf, da sonst die Kissen in den Kassetten durch die grossen Relativ-Bewegungen, die durch die Motorschwingungen zwischen Auspuff und Isolierung entstehen, nach kurzer Zeit zerstört werden. Um dies zu verhindern, ist man gezwungen, die Isolierkassetten von der Auspuffleitung schwingungsmässig zu entkoppeln. Dies geschieht dadurch, dass durch eine separate, aufwendige Stützkonstruktion die Kassetten in einem gewissen Abstand zur Auspuffleitung in Position gehalten werden. Diese Stützkonstruktion weist ebenfalls schlechte wärmetechnische und schalltechnische Eigenschaften auf. Eine solche Haltekonstruktion verursacht zudem unnötige Zusatzkosten, grosse Dimensionen der Kassetten, Unhandlichkeit und grosse Gewichte. Die Kassetten können zudem nur mit einem Kran demontiert und wieder montiert werden.

In der EP 0 403 943 B1 wird eine thermische Isolierung für Rohr!eitungskompensatoren beschrieben, bestehend aus zwei Halbschalen, wobei jede Halbschale eine aus Glasgewebe mit aufgedämpfter Aluminiumfolie bestehende Aussenhülle mit integriertem Balg und eine aus Glasgewebe bestehende Innenhülle mit integriertem Balg aufweist. Die Stirnseiten werden mit formstabilen Halbringen ausgekleidet. Als Isoliermaterial werden Steinwollmatten verwendet. Die zwei Isolierhälften werden mittels temperaturbeständigen Reissverschlüssen zusammengehalten. Die Funktionsweise der Isolierung ist folgendermassen: Der Isolierkörper wird bei der Montage zwischen die Enden der anschliessenden Festisolierung (Blechabschlüsse) der Rohrleitung geklemmt. Durch Zusammendrücken des Balges bei der Montage ensteht eine Federwirkung, sodass auf diese Weise die Stirnseiten des Isolierkörpers zwangsläufig allen axialen und angularen Bewegungen aufgrund von thermisch verursachten Längenänderungen folgen. Versuche haben gezeigt, dass der Glasfaserstoff, der mit V4A-Drähten durchwoben ist, den Relativbewegungen, die bei den mechanischen Schwingungen entstehen nicht widerstehen kann und dass es unweigerlich zur Zerstörung des Stoffes kommt. Weiter haben sich die Stoffe mit aufgedämpfter Aluminiumfolie als Aussenhülle, nicht bewährt, da die Aluminiumfolie durch Strahlungstemperaturen am Motor oder durch Spaltverluste des Isolierkörpers zerstört wird und somit sowohl die Funktionsweise der Isolierung als auch der Schutz gegen das Eindringen von heissem Motorenöl nicht mehr gegeben sind. Weiter hat sich gezeigt, dass sich die Reissverschlüsse, die die zwei Isolierhälften zusammenhalten, nach einer gewissen Betriebszeit nicht mehr öffnen lassen. Steinwollmatten als Isoliermaterial ist für Körper, die mechanischen Schwingungen unterworfen sind, völlig ungeeignet, da sich Steinwollmatten aufgrund der Schwingungen mit der Zeit in Staub auflösen.

Der vorliegenden Erfindung liegt daher die Aufgabe zugrunde, ein flexibles Isoliersystem zu schaffen, das gute thermische und akustische Isolationseigenschaften hat, einfach montierbar und entfernbar ist und zudem auch bei hohen Temperaturen und starken Schwingungen des zu isolierenden Bauteils eine hohe Lebensdauer hat.

Diese Aufgabe wird durch die Merkmale des Anspruches 1 gelöst. Die abhängigen Ansprüche beschreiben bevorzugte Ausführungsformen.

Beim Lösen der Aufgabe wurde erkannt, dass die Isolierung so ausgeführt werden muss, dass keine isolationsfreien Verbindungen von Bauteil-Aussenbereichen zur Aussenseite der Isolierung führen. Dies kann am besten dadurch erzielt werden, dass die miteinander verbindbaren Schalenelemente bzw die Hüllen mit dem Isoliermaterial an die jeweilige Form der Aussenfläche des Bauteils angepasst sind und mit einer Kontaktfläche im wesentlichen dicht an der Aussenfläche des Bauteiles anliegen. Durch das Aneinanderanliegen entstehen aufgrund der Schwingungen bzw. Vibrationen des Bauteils hohe Reibungskräfte, vor deren zerstörenden Wirkung die Hülle bei der erfindungsgemässen Lösung durch das Einsetzen einer reibungsaufnehmenden Kontakt- bzw. Reibungsschicht geschützt wird. Die Reibungsschicht ist an die Form des Bauteiles angepasst und nimmt die schwingungsbedingte Reibung zwischen dem Bauteil und dem Schalenelement flächig auf Lediglich im Bereich von Kompensatoren, bzw. deren Balgelemente ist ein Anliegen der Schalenelemente nicht erwünscht, weil die Funktionsfähigkeit von Balgelementen durch anliegendes, bzw. eingeklemmtes Isolationsmaterial bzw. Hüllenbereiche eingeschränkt und gleichzeitig die Isolation zerstört wird. Daher muss im Bereich der Kompensatoren ein dichtes Aneinanderanschliessen der miteinander verbundenen, vom Kompensator beabstandeten Schalenelemente gewährleistet werden, so dass der Freiraum zwischen dem Bauteil und der Isolierung nach aussen dicht abgeschlossen ist. Dies wird durch das Verzichten auf balgförmige Dichtflächen zwischen den miteinander verbundenen Schalenelementen erzielt, wobei auf den Balg lediglich im Bereich der Dichtflächen verzichtet wird, so dass aufgrund der zentralen Balgbereiche der Verformungsbereich genügend klar ausgebildet ist um die Dehnungs- und Schrumpfungsbewegungen aufzunehmen. Unerwünschte Verformungen mit der Gefahr eines Kontaktes zwischen der Isolierung und dem Kompensatorbalg treten nicht auf. Von den zentralen Balgbereichen geht gegebenenfalls eine Federwirkung aus, die insbesondere bei zusammengepresst montierten Schalenelementen gewährleistet, dass diese den Dehnungen ohne das Anwenden von Zugkräften folgen können.

Das Isoliersystem ist leicht demontierbar und wieder montierbar und wie bei herkömmlichen Isolierkissen ist sein eigentlicher Isolierkörper weich, um die Form der Isolierung dem zu isolierenden Körper anpassen zu können. Wobei darauf zu achten ist, dass Rohrabzweiger direkt in der Isolierkomponente integriert werden, um eine homogene Isolierkomponente zu erhalten. Das Isoliersystem ist trotz weichem Isolierkörper formstabil. Dort wo extreme Längenänderungen infolge von hohen Temperaturen (z.B. bei Auspuffleitungen) durch Metallkompensatoren kompensiert werden, ist die Isolierkomponente im Bereich des Kompensators flexibel ausgeführt, so dass das Isoliersystem die Bewegungen der Auspuffleitung mitmacht. Ansonsten könnte das Isoliersystem selbst und/oder der Kompensator zerstört werden. Die innere Fläche des Isoliersystems, die auf dem zu isolierenden Körper zu liegen kommt, ist resistent gegen Relativ-Bewegunge, die durch mechanische Schwingungen hervorgerufen werden. Das Hüllenmaterial des Isoliersystems ist vorzugsweise durch eine zumindest einseiteige, insbesondere aber beidseitige Silikonbeschichtung gegen das Eindringen von heissem Motorenöl geschützt.

Die Zeichnungen erläutert die erfindungsgemasse Isolierung anhand zweier Ausführungsbeispiele. Dabei zeigt
- Fig 1: eine stirnseitige Ansicht eines mit einer zweiteiligen Isolierung isolierten Rohrabschnittes mit einem Abgang
- Fig. 2: im oberen Bereich eine Schnittdarstellung gemäss A-A und im unteren Bereich eine Seitenansicht des Rohrabschnittes mit Abgang gemäss Fig. 1
- Fig. 3: eine stirnseitige Ansicht eines mit einer zweiteiligen Isolierung isolierten Metallkompensators
- Fig. 4: im oberen Bereich eine Schnittdarstellung gemäss B-B und im unteren Bereich eine Seitenansicht des Kompensators gemäss Fig. 3
- Fig. 5a: eine perspektivischen Darstellung der Innenhaut eines Schalenelementes
- Fig. 5b: eine Zusammenstellung von Zuschnitt-Teilen der Innenhaut gemäss Fig. 5a

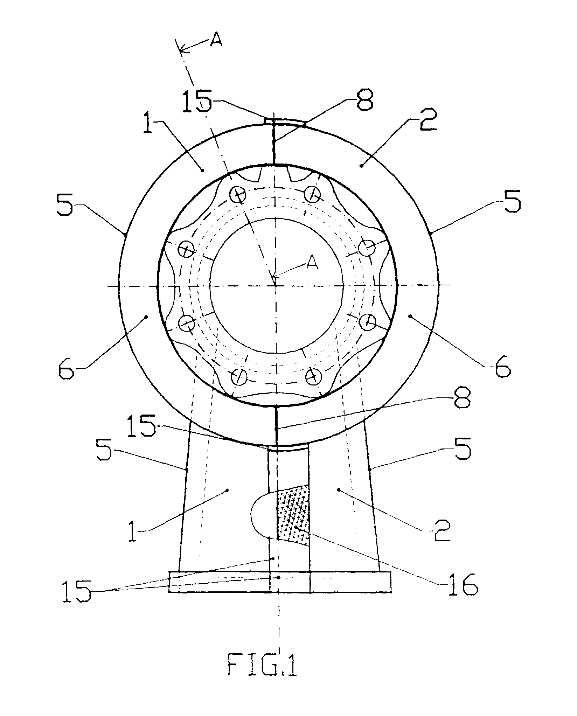

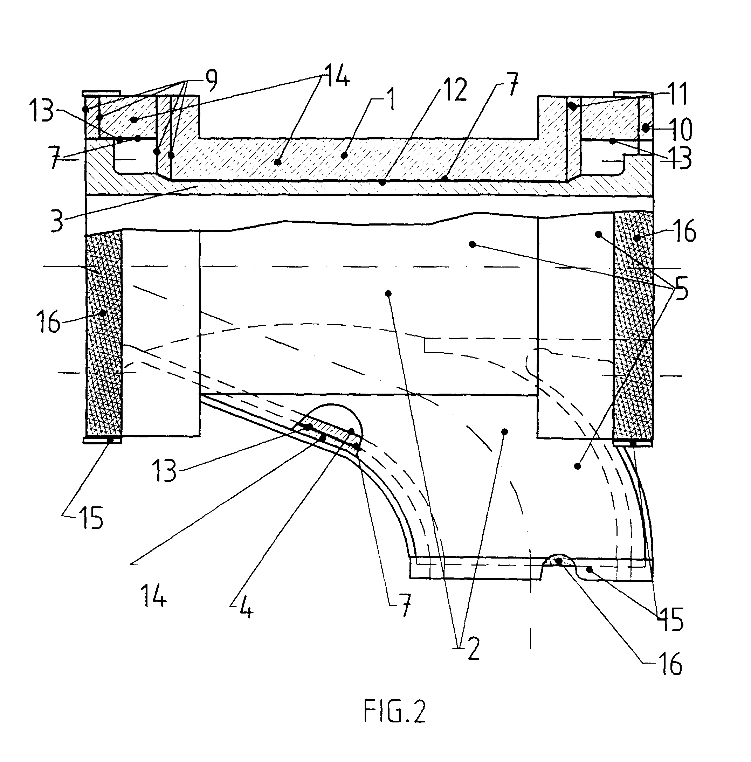

Die Zeichnungen FIG.1 und FIG.2 zeigen die zwei zusammengefügten Isolierhälften 1 und 2 für einen Auspuffteil 3 mit integriertem Zylinderabgang 4. Jede Isolierhälfte besitzt eine Aussenhaut 5 bestehend aus einem Glasfaserstoff mit zweiseitiger Silikonbeschichtung, die das Eindringen von Öl und Spritzwasser verhindert. Der Hüllenbereich der Stirnseiten 6 der Isolierhälften besteht aus einem mit V4A-Drähten durchwobenem Glasfasergewebe. Die V4A-Drähte verleihen dem Glasgewebe eine erhöhte mechanische Festigkeit bei hohen Einsatztemperaturen. Die Innenhaut 7, bzw. der Innenmantel der Isolierkomponenten ist so ausgebildet, dass er exakt den äusseren Konturen des Auspuffteils 3 und dem Zylinderabgang 4 folgt, um eine möglichst gleichmässige Wärmeverteilung auf dem Gusskörper zu erhalten und um Wärmespannungen im Guss zu vermeiden, die zu Wärmerissen führen könnten. Weiter werden Wärmezirkulationen zwischen dem Gusskörper und der Isolierung vermieden, welche erhöhte Temperaturverluste zur Folge hätten. Die Kontur der Aussenhaut 5 verläuft parallel zu der Kontur der Innenhaut 7, im Abstand der entsprechenden Isolierstärken. Die Innenhaut 7, die Fugenflächen 8 und die Umhüllungen 9 für die äusseren 10 und die inneren Stützhalbringe 11 sind aus dem V4A-Drähten verstärktem Glasfasergewebe gefertigt.

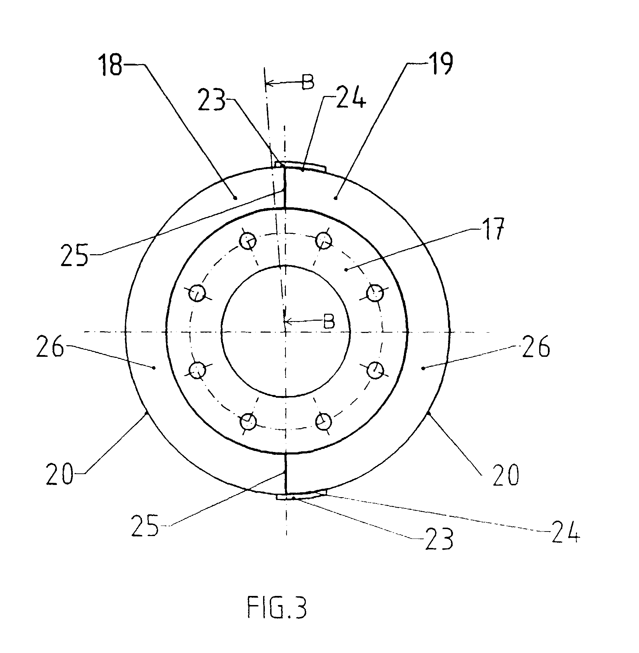

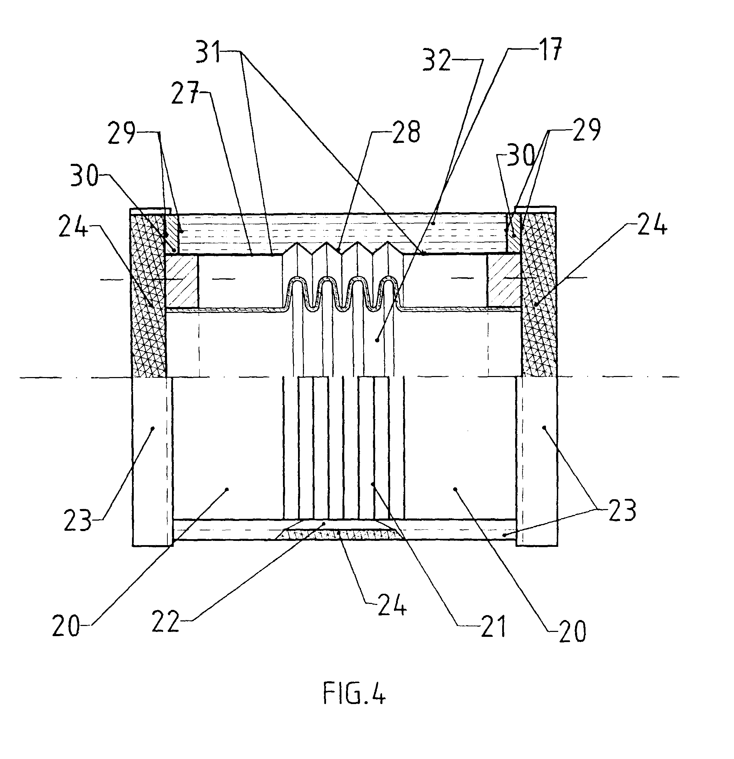

Um eine Stabilität der Isolierhälften zu erreichen und um beispielsweise eventuelle Axialkräfte aufnehmen zu können, die an den beiden Stirnflächen durch benachbarte Kompensatoren entstehen. die als Isolierkomponenten ausgebildet sind, wie Zeichnungen FIG.3 und FIG.4 zeigen, werden bei den zwei Enden der Isolierhälften je zwei äussere 10 und je zwei innere Stützhalbringe 11 aus stabilen Platten verwendet. die aus gepressten Silikatfasern bestehen. Dieses Material zeichnet sich vorallem durch seine hohe mechanische Festigkeit und durch seine guten wärmetechnischen Eigenschaften aus Die äusseren Stützhalbringe dienen zusätzlich als fixe Befestigungspunkte fur die Aussenhaut 5 und die inneren Stützhalbringe 11 werden zur Befestigung der Innenhaut 7 verwendet. Die Befestigung der Glasfaserstoffe auf die Stützhalbringe erfolgt mit Stahlklammern, die mittels Luftdruck in die Platten geschossen werden. Die äusseren 10 und inneren Stützringe 11 selber werden in Umhüllungen 9 eingebracht, um sie in Position zu halten.

Die Aussenseite der Innenhaut 7 der Isolierhälften 1 und 2, wo die Isolierhälften den Gusskörper 3 und 4 des Auspuffs berühren, muss zusätzlich geschützt werden, da durch die Motorschwingungen hohe Relativ-Bewegungen zwischen dem Gusskörper 3 und 4 des Auspuffs und der Innenhaut 7 entstehen. Tests auf dem Motorenprüfstand haben gezeigt, dass die Relativ-Bewegungen den Glasfaserstoff zerstören, obwohl er zur mechanischen Verstärkung mit V4A-Drähten durchwoben ist. Zum Schutz der Innenhaut 7 der Isolierhälften 1 und 2 , der auf dem Auspuffteil 3 aufliegt, werden im Bereich zwischen den zwei inneren Stützhalbringen 11 je ein Chromstahlblech 12 angebracht. Das Chromstahlblech 12 wird an die Kontur des Auspuffteils 3 angepasst. Die Befestigung des Chromstahlbleches erfolgt mittels Spanplattenschrauben direkt mit den inneren Stützhalbringen 11. Die übrige Innenhaut 7 des Auspuffteils 3 und des Zylinderabgangs 4 wird mit einem, der Kontur angepasstem V4A-Drahtnetz 13 geschützt, dass sich durch seine guten elastischen und mechanischen Eigenschaften auszeichnet. Die Befestigung des Drahtnetzes 13 erfolgt mittels Stahlklammern an den äusseren 10 und inneren Stützhalbringen 11, mittels Glasfaserfaden an der Innenhaut 7, vorzugsweise entlang der Berandungen insbesondere entlang der Berandungen ohne Stützhalbringe, und mittels Rollenschweissen am Chromstahlblech 12.

Bei der Auspuffisolierung wird vom Isoliermaterial 14 verlangt, dass es durch die Motorschwingungen nicht in Mitleidenschaft gezogen wird und dass es sich nicht durch heisses Motorenöl selbst entzünden kann. Die Resistenz gegen Motorschwingungen wird durch ein langfaseriges Isoliermaterial 14 erreicht. Die zweite Anforderung an die Isolierung 14 kann nur von einem Material erreicht werden, das sich im Falle von heissem Motorenöl nicht katalytisch verhält. Diese Anforderungen werden beispielweise durch Silikatfasermatten erfüllt.

Um die beiden Isolierhälften 1 und 2 miteinander verbinden zu können und um die Isolierhälften mit den eventuell benachbarten Isolierkomponenten verbinden zu können, werden an die zwei Trennungsfugen und an die Stirnseiten der Isolierhälften 1 und 2, sowie an die Stirnseite des integrierten Zylinderabganges je ein Lappen 15 aus Glasfaserstoff mit zweiseitiger Silikonbeschichtung angenäht, auf deren Innenseiten je ein Metallklettenverschluss 16 angebracht wird. Diese Metallklettenverschlüsse 16 sind dringendst erforderlich, um den hohen Temperaturen widerstehen zu können, denen sie bei möglichen Spaltverlusten ausgesetzt sind. Wie Prüfstandstest gezeigt haben, werden andere Verschlussarten entweder durch die hohen Temperaturen, die von Spaltverlusten herrühren, oder durch die mechanischen Schwingungen, die durch die Motorerregungen hervorgerufen werden, zerstört. Mit diesen Verbindungslappen 15 können Spaltverluste erheblich reduziert werden.

Ein weiteres Ausführungsbeispiel wird anhand der Zeichnungen FIG.3 und FIG.4 näher beschrieben. Meistens besitzen die Auspuffrohre Metallkompensatoren 17, welche die Aufgabe haben, die axialen Längsdehnungen aufzunehmen, die durch die hohen Abgastemperaturen entstehen. Diese Kompensatoren sind links und rechts durch geschraubte Flansche mit den Auspuffteilen 3, insbesondere solche mit integrierten Zylinderabgängen 4, verbunden. Damit nun die Isolierhälften 1 und 2 nicht durch diese Längsänderungen zerstört werden können, muss die Isolierung im Bereich des Metallkompensators 17 elastisch ausgeführt sein. Dies geschieht durch zwei Isolierhälften 18 und 19. Jede Isolierhälfte 18, 19 besitzt eine Aussenhaut 20 bestehend aus einem Glasfaserstoff mit zweiseitiger Silikonbeschichtung. Im mittleren Bereich der beiden Isolierhälften 18, 19 ist ein Balg 21 eingenäht, der aus einem Glasgewebe mit zweiseitiger Silikonbeschichtung gefertigt ist. Die Silikonbeschichtung ist notwendig, um ein Eindringen von heissem Motorenöl in die Isolierung zu verhindern. Damit der Balg 21 die Längsdehnungen der Auspuffleitung aufnehmen kann, muss die Aussenhaut 20 der angrenzenden zylindrischen Teile mit einem gewissen Widerstand den Längskräften entgegenwirken. Dies wird dadurch erreicht, dass die Silikonbeschichtung der Aussenhaut 20 ein Gewicht von mindestens 400 g/m² und die des Balges ein solches von maximal 145 g/m² aufweist.

Im Gegensatz zur EP 0 403 943 B1 endet zumindest der äussere Balg 21 jeder Isolierhälfte 18, 19 ca. 40 mm vor den Enden des Umfanges. Das heisst, auf den beiden Längsseiten der Isolierhälften 18, 19 im Bereich des Balges 21 sind je zwei faltenlose Streifen 22 von ca. 40 mm Breite vorhanden. Der Balg 21 wird an beiden Enden unter diese Streifen 22 geführt und zusammengenäht. Vorzugsweise zeichnet sich auch der inneren Balg 28 dadurch aus, dass er vor den Dichtflächen 25 endet. Die eine Isolierhälfte 18 wird mit Lappen 23 versehen. auf die je ein Metallklettenband 24 genaht ist Diese Klettverschlüsse dienen zur Befestigung der Isolierhälften 18 und 19 untereinander. wobei jeweils das am Lappen 23 befestigte Metallklettband 24 mit einem auf der Aussenhaut der anderen Isolierhälfte befestigten Metallklettband zusammenwirkt und die beiden Isolierhälften 18, 19 seitlich gestossen zusammenhält. Die Lappen 23 werden aus Glasfasergewebe mit zweiseitiger Silikonbeschichtung gefertigt, wobei die Silikonbeschichtung ein Mindestgewicht von ca. 400 gr/m² aufweisen muss. Damit möglichst keine Heissgase austreten können,die zur Zerstörung der Aussenhülle und der Klettverschlüsse führen, sind ebene Dichtflächen 25 der Stossstellen erforderlich. Die Erfahrung hat gezeigt, dass bei der EP 0 403 943 B1 die Verschlusslappen, die als Bälge ausgebildet sind, bei hohen Abgastemperaturen verkohlen Das ist der Grund, dass der Balg 21 an diesen Stellen erfindungsgemäss durch faltenlose Streifen 22 ersetzt wird. Die Dichtfläche 25 wird auch zwischen dem glatten Klettbereich und dem Bereich des inneren Balges 28 nicht als Balg, sondern als ebene Fläche ausgebildet, um die Spaltverluste so gering wie möglich zu halten und um der Zerstörung der Aussenhülle 20 durch die hohen Abgastemperaturen vorzubeugen. Die Isolierhälften 18. 19 werden vorgespannt, bzw. etwas zusammengepresst montiert und können sich auf die Länge der Dichtfläche 25 ausdehnen. Bei der Montage sind die Dichtflächen aneinander anliegend etwas gebaucht, bzw. gewellt und dabei dicht verbindbar.

Für die Befestigung der Isolierhälften 18 und 19 an die benachbarten Isolierhälften 1 und 2 werden Lappen 23 mit Metallklettenverschlüssen 24 an den stirnseitigen Enden 26 der Isolierhälften 18 und 19 genäht. Die Lappen 23 sind aus dem gleichen Material wie die Aussenhülle 20 gefertigt.

Die stirnseitigen Enden 26 der Isolierhälften 18 und 19, die Innenhaut 27, bzw. der Innenmantel, der innere Balg 28, die Hüllen 29 für die Stützhalbringe 30 und die Dichtfläcnen 25 sind aus einem mit V4A-Drähten durchwobenen Glasfasergewebe gefertigt.

Um die Stabilität der Isolierhälften 18 und 19 zu erreichen und um die Axialkräfte, die durch den Balg auf die Stirnflächen wirken, aufnehmen, respektive auf die benachbarten Isolierhälften 1 und 2 an beiden Enden übertragen zu können, werden für die Stirnseiten der Isolierhälften Stützhalbringe 30 aus stabilen Platten verwendet, die aus gepressten Silikatfasern bestehen. Dieses Material zeichnet sich durch seine hohe mechanische Festigkeit und durch seine guten wärmetechnischen Eigenschaften aus. Die äusseren Stützhalbringe dienen zusätzlich als fixe Befestigungspunkte für die Aussenhaut 20 und die Innenhaut 27. Die Befestigung der Glasfaserstoffe auf die Stutzhalbringe 30 erfolgt mit Stahlklammern, die mittels Luftdruck in die Platten geschossen werden. Die Stützhalbringe 30 selber werden in Stoffhüllen, bzw. Umhüllungen 29 eingebracht, um sie in Position zu halten.

Im Gegensatz zur EP 0 403 943 B1 werden erfindungsgemäss die Aussenseite der Innenhaut 27 der Isolierhälften 18 und 19, wo die Isolierhälften auf den Flanschen des Metallkompensators 17 aufliegen und der Stoff aussen an den Stirnseiten, die gegen die benachbarten Isolierhälften 1 und 2 drücken, um die Axialkräfte zu übertragen, zusätzlich geschützt, da durch die Motorschwingungen hohe Relativ-Bewegungen sowohl zwischen den Flanschen des Metallkompensators 17 und der Innenhaut 27 als auch zwischen den Kontaktflächen der Stirnseiten der Isolierhälften 18, 19 entstehen. Tests auf dem Motorenprüfstand haben gezeigt, dass die Relativ-Bewegungen den Glasfaserstoff zerstören, obwohl er zur mechanischen Verstärkung mit V4A-Drähten durchwoben ist. Um den Glasfaserstoff zu schützen, werden V4A-Drahtnetze 31 auf die Stoffe an den oben erwähnten Stellen genäht. Der Stoff des inneren Balges 28 wird nicht zusätzlich geschützt, da der Balg keinen Kontakt mit dem Metallkompensator 17 hat und um die Beweglichkeit des Balges 28 nicht zu beeinträchtigen. Wenn beidseits des Balges V4A-Drahtnetze 31 an der Innenhaut 27 befestigt sind, so wird dadurch die Steifigkeit erhöht, wie dies bei der Aussenhaut 20 durch eine erhöhte Silikonbeschichtung erzielt wird.

Bei der Auspuffisolierung wird vom Isoliermaterial 32 verlangt, dass es durch die Motorschwingungen nicht in Mitleidenschaft gezogen wird und dass es sich nicht durch heisses Motorenöl selbst entzünden kann. Für eine Kompensatorenisolierung kommt weiter erschwerend dazu, dass das Isoliermaterial 32 im Bereiche des Balges grossen Längenänderungen unterworfen ist. Die Resistenz gegen Motorschwingungen und die grossen Längenänderungen verlangen, im Gegensatz zur EP 0 403 943 die Steinwollmatten vorschreibt, ein langfaseriges Isoliermaterial. Die dritte Anforderung an das Isoliermaterial kann nur von einem Material erreicht werden, dass sich im Falle von heissem Motorenöl nicht katalytisch verhält. Diese Anforderungen werden beispielweise durch Silikatfasermatten erfüllt.

Die Schichten der Schalenelemente, nämlich die Innenhaut, die Aussenhaut, die Reibungsschicht und auch die Schicht aus Isoliermaterial, sind aus Teilen von flächigen Materialbahnen hergestellt. Es handelt sich also grundsätzlich um zweidimensionale Teile, die erst durch das Zusammennähen, im Falle des Drahtgitters durch Rollenschweissen, oder im Falle des Isoliermateriales durch das gestossene Einfüllen in die Hülle, zu einer Schicht mit dreidimensionaler Form führen. Die flächigen Teile müssen als Zuschnitte so gewählt werden, dass die daraus zusammengestellten Schichten eine im wesentlichen exakt an das Bauteil angepasste Form erhalten. Da sowohl der Glasfaserstoff als auch das Gitternetz beweglich, bzw. weich sind, können kleinere Abweichungen von der gewünschten Form durch Verformungen kompensiert werden. Entsprechend liegt die Innenhaut und die Reibungsschicht im wesentlichen vollständig auf der Bauteiloberfläche auf, auch wenn die Zuschnitte lediglich zweidimensionale Annäherungen an die effektiven Krümmungen mit beliebigen Krümmungsänderungen sind. Das genaue bzw. wulstfreie Anliegen verhindert das Entstehen von lösenden Kräften. Bei flachen nicht an die Aussenfläche des jeweiligen Bauteiles angepassten Kissen treten Wülste auf, die bei starken Vibrationen Kräfte zu den Verschlüssen übertragen, welche dann aufgerissen werden. Bei den Verschlüssen ist es ebenfalls wichtig, dass die Verbindungskräfte nicht nur punktuell, oder abschnittweise erzielbar sind. Die Verbindung muss sich linienförmig, bzw. streifenförmig entlang der gesamten Berandung der Schalenelemente erstrecken, was bei lösbaren Verbindungen vorzugsweise mit Klettverschlüssen ermöglicht wird.

Zum Festlegen von zu verwendenden Zuschnitt-Teilen muss nach minimalen Abweichungs-Kriterien eine Ähnlichkeitsfläche aus zweidimensionalen Teilflächen bestimmt werden, deren Abweichungen kleiner als maximal zulässig sind. Für die direkt anliegende Reibungsschicht und die Innenhaut werden ausgehend von der Form der Aussenfläche des Bauteiles zweidimensionale Abwicklungen bzw. Zuschnitt-Teile mit den jeweils benötigten Naht-Zugaben bestimmt, zugeschnitten und zur gewünschten Schicht verbunden. Die Aussenhaut wird an eine Fläche angenähert, die um eine gewünschte Schichtdicke von der Aussenfläche des Bauteils beabstandet ist. Die Zuschnitt-Teile der Schicht aus Isoliermaterial sind vorzugsweise an eine Fläche angenähert, die zwischen der Innen- und der Aussenhaut verläuft.

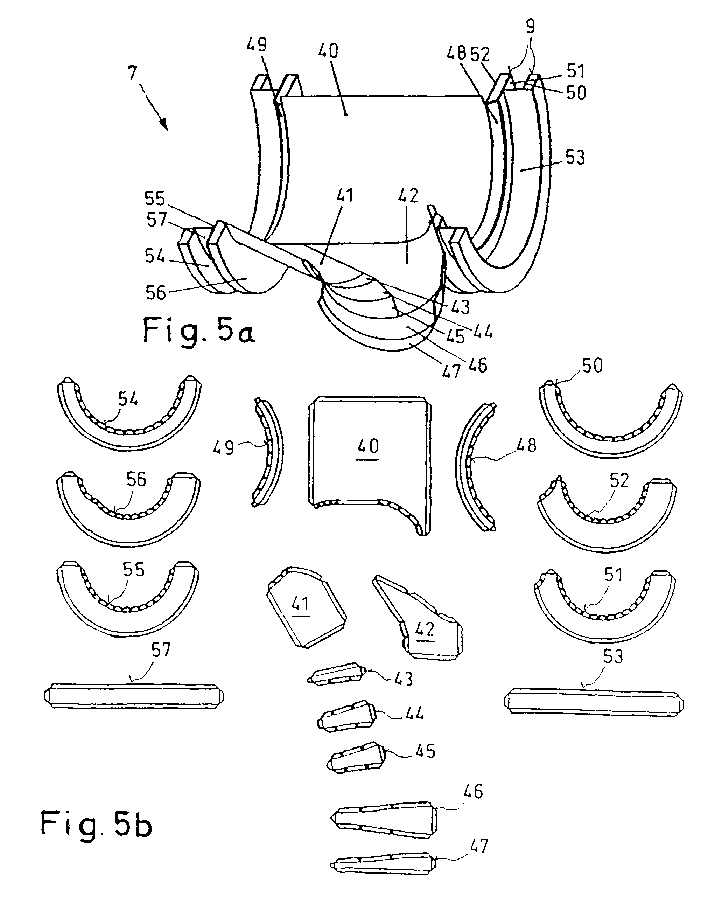

Fig. 5a und 5b zeigen beispielhaft eine aus Zuschnitt-Teilen 40-57 zusammengestellte Innenhaut 7 eines Schalenelementes für ein Rohrstück mit Abzeigung. Die Umhüllungen 9 für die Stützteile sind ebenfalls als Bereich der Innenhaut dargestellt. Die von einfachen Rohrkrümmungen bekannten fischförmigen, bzw. bezüglich zweier zentraler Achsen symmetrischen, Zuschnitt-Teile gnügen nicht um Flächen anzunähern, die in verschiedenen Richtungen variabel gekrümmt sind. Wie aus der Form der Zuschnitt-Teile 41-43 hervorgeht, umfassen Schalenelemente für Bauteile mit komplizierten Geometrien der Aussenflächen symmetriefreie Zuschnitt-Teile.

Weil die Reibungsschicht direkt an die Innenhaut 7 anschliesst, sind deren Zuschnitt-Teile im wesentlichen gleich, wie die dargestellten Teile der Innenhaut 7. Gegebenenfalls ist der teilrohrförmige Zuschnitt 40 bei der Reibungsschicht aus Chromstahlblech und die Zuschnitt-Teile 41-47 aus Drahtgitternetz gebildet.

## Patentansprüche

1. Isolierung für Aussenflächen von Bauteilen, zusammengestellt aus miteinander verbindbaren Schalenelementen (1,2;18,19), die eine Hülle aus Glasfaserstoff mit einer Innen- und einer Aussenhaut (7,5;27,20), in der Hülle schichtförmiges Isoliermaterial (14,32) und zumindest an zwei seitlichen Berandungen rippenförmige, mit der Hülle verbundene, formstabile Stützteile (10,11;30) umfassen, **dadurch gekennzeichnet, dass** die Schalenelemente (1,2;18,19) bauteilseitig an die Innenhaut (7) anschliessend, zumindest bereichsweise eine reibungsaufnehmende Reibungsschicht (12,13) aus Flachmaterial umfassen, wobei die Reibungsschicht montierter Schalenelemente (1,2;18,19) an glatten Bereichen der Aussenfläche des Bauteiles anliegt und somit die schwingungsbedingte Reibung zwischen dem Bauteil und dem Schalenelement (1,2;18,19) flächig aufnimmt.

2. Isolierung nach Anspruch 1, dadurch gekennzeichnet, dass die Reibungsschicht (12,13) aus Chromstahl besteht und dabei bereichsweise vorzugsweise als Chromstahldrahtnetz, insbesondere als V4A-Drahtnetz, gegebenenfalls aber als Chromstahlblech ausgebildet ist und dass Drahtnetze vorzugsweise mittels Stahlklammern an Stützteilen (10,11;30), gegebenenfalls mittels Glasfaserfaden an der Innenhaut (7) und insbesondere mittels Rollenschweissen an Blechbereichen befestigt sind.

3. Isolierung nach Anspruch 1 oder 2, dadurch gekennzeichnet, dass das schichtförmige Isoliermaterial (14,32) aus langfaserigen Schichtmaterial, das im Kontakt mit heissem Motorenöl nicht katalytisch wirkt, vorzugsweise aus Teilen von Silikaffasermatten, zusammengestellt ist.

4. Isolierung nach einem der Ansprüche 1 bis 3, dadurch gekennzeichnet, dass der Glasfaserstoff zumindest der Innenhaut (7), vorzugsweise aber der gesamten Hülle, mit Metalldrähten, vorzugsweise mit V4A Drähten, durchwoben ist und/oder zumindest einseitig vorzugsweise aber zweiseitig mit Silikon beschichtet ist.

5. Isolierung nach einem der Ansprüche 1 bis 4, dadurch gekennzeichnet, dass die Stützteile (10,11,30) zur Stabilisierung der Schalenelemente (1,2;18,19) sowie zur Kraftübertragung zwischen Schalenelementen (1,2;18,19), bzw. zum Aufnehmen von Axialkräften, aus gepresstem Silikatfasermaterial bestehen und/oder von Glasfaserstoff umfasst sind und/oder dass zur Verbindung der Hülle mit den Stützteilen (10,11,30) Stahlklammern durch die Hüllenhaut in die Stützteile (10,11,30) eingebracht sind.

6. Isolierung nach einem der Ansprüche 1 bis 5, dadurch gekennzeichnet, dass an mindestens einer seitlichen Berandung mindestens zwei Stützteile (10,11) parallel zur Berandung, vorzugsweise quer zur Berandung durch einen mit Isoliermaterial gefüllten Hüllenbereich voneinander beabstandet, stabilitätserhöhend angeordnet sind, wobei insbesondere bei Bauteilen mit von der Bauteil-Hauptfläche flanschartig vorstehenden Bereichen ein äusserer Stützteil (10) an den vorstehenden Bereich und ein innerer Stützteil (11) an die Hauptfläche angepasst ist.

7. Isolierung nach einem der Ansprüche 1 bis 6, dadurch gekennzeichnet, dass entlang den seitlichen Berandungen Klettverbindung mit Metallklettflächen (16,24) vorgesehen sind, wobei von den paarweise zusammenwirkenden Klettflächen jeweils eine nach aussen gerichtete Klettfläche (16) an der Aussenhaut (5) des einen Schalenelementes (1,2) und eine nach innen gerichtete (24) an einem vom anderen Schalenelement (18,19) über die seitliche Berandung vorstehenden Verbindungslappen (23) befestigt, bzw. damit vernäht ist, wobei die Verbindungslappen (15,23) aus silikonbeschichtetem Glasfaserstoff gebildet sind.

8. Isolierung nach einem der Ansprüche 1 bis 7, dadurch gekennzeichnet, dass die Reibungsschicht (12,13), die Innenhaut (7,27), die Aussenhaut (5,20) und vorzugsweise auch die Isolierschicht (14,32) aus ähnlichen Zuschnitt-Teilen (40-57) zusammengestellt sind, wobei die Zuschnitt-Teile (40-57) so dimensioniert und geformt sind, dass ein daraus zusammengestelltes, montiertes Schalenelement (1,2;18,19) im wesentlichen genau entlang einer beliebig geformten Aussenflächen eines Bauteiles verläuft und die Stirnseiten der seitlichen Berandungen im wesentlichen normal zum darunterliegenden Bereich der Aussenfläche verlaufen.

9. Isolierung nach einem der Ansprüche 1 bis 7, dadurch gekennzeichnet, dass die Schalenelemente (18,19) zum Isolieren eines sich entlang einer Kompensatorachse erstreckenden Kompensators (17) einen Isolierbalg (21,28) umfassen, der sich im montierten Zustand über einen Teil des Kompensatorumfangs und entlang der Kompensatorachse im wesentlichen über den Bereich eines Kompensatorbalges erstreckt und radial von diesem beabstandet ist, wobei der Faltenbereich des Isolierbalges (21,28) in Umfangsrichtung beidseits mit einem faltenlosen Abschlussbereich verbunden bzw. vernäht ist, so dass in Umfangsrichtung aneinander anschliessende Kompensator-Schalenelemente (18,19) mit ebenen Dichtbereichen (25) aneinander anliegen und vorzugsweise mit in Achsrichtung durchgehend verschliessenden Klettverbindungen (23,24) verbindbar sind.

10. Isolierung nach Anspruch 9, dadurch gekennzeichnet, dass die Schalenelemente (18,19) entlang der Kompensatorachse zumindest auf einer Seite, vorzugsweise auf beiden Seiten, des Isolierbalges (21,28) einen ungefalteten und vom Kompensator (17) radial beabstandeten Abschlussbereich umfassen, dessen Steiffigkeit durch eine dickere Silikonbeschichtung, vorzugsweise mindestens 400gr/m², zumindest der Aussenhaut (20), gegebenenfalls auch der Innenhaut (27) erhöht ist und dadurch gewährleistet, dass Längenausdehnungen nicht zu Verformungen in einem Abschlussbereich führen, sondern vom Isolierbalg (21,28) aufgenommen werden, wobei die Silikonbeschichtung zumindest der Aussenhaut (20), gegebenenfalls auch der Innenhaut (27) des Isolierbalges (21,28) vorzugsweise weniger als 145gr/m² beträgt.

## Claims

1. Insulation for the external faces of component parts, assembled from shell elements (1,2;18,19) which can be joined to each other and which comprise a cladding of glass fibre material having an inner and an outer skin (7,5;27,20), insulating material (14,32) in the form of layers in the cladding, and rib-like, dimensionally stable supporting parts (10,11;30) which are joined to the cladding and which are disposed at least at two lateral edges, **characterised in that** the shell elements (1,2;18,19) comprise, at least regionally on the component part side, a friction-absorbing friction layer (12,13) made of sheet-like material which adjoins the inner skin (7), wherein the friction layer is seated against installed shell elements (1,2;18,19) at plain regions of the outer face of the component part and thus absorbs, over its surface, friction between the component part and the shell element (1,2;18,19) which is caused by vibrations.

2. Insulation according to claim 1, characterised in that the friction layer (12,13) consists of chrome steel and is preferably constructed regionally as a chrome steel wire mesh, particularly as a V4A wire mesh, or is optionally constructed as a chrome steel sheet, and that wire meshes are preferably fixed by means of steel staples to supporting parts (10,11;30), and are optionally fixed by means of glass fibre threads to the inner skin (7), and in particular are fixed to sheet regions by means of roller welding.

3. Insulation according to claims 1 or 2, characterised in that the layer-like insulating material (14,32) is composed of a long-fibre layer material which does not act as a catalyst in contact with hot engine oil, and is preferably composed of parts comprising silicate fibre mats.

4. Insulation according to any one of claims 1 to 3, characterised in that the fibreglass material of at least the inner skin (7), and preferably of the entire cladding, is shot through with metal wires, preferably with V4A wires, and/or is coated with silicone on at least one side, preferably on two sides.

5. Insulation according to any one of claims 1 to 4, characterised in that the supporting parts (10,11,30) consist of pressed silicate fibre material and/or are surrounded by fibreglass material for stabilising the shell elements (1,2;18,19) and for the transmission of force between shell elements (1,2;18,19) or for the absorption of axial forces, and/or that steel staples are introduced into the supporting parts (10,11,30) through the cladding skin in order to joining the cladding to the supporting parts (10,11,30).

6. Insulation according to any one of claims 1 to 5, characterised in that, in order to increase the stability, at least two supporting parts (10,11) at at least one lateral edge are spaced apart from each other parallel to the edge, preferably transversely to the edge, by a cladding region filled with insulating material, wherein, particularly for component parts which comprise regions which project in the manner of flanges from the main face of the component part, an outer supporting part (10) is fitted to the projecting region and an inner supporting part (11) is fitted to the main face.

7. Insulation according to any one of claims 1 to 6, characterised in that burred joints comprising burred metal faces (16,24) are provided along the lateral edges, wherein, of each of the burred faces which cooperate in pairs, an outwardly oriented burred face (16) is fixed or is sewn to the outer skin (5) of one shell element (1,2) and an inwardly oriented burred face (24) is fixed or is sewn to a joint tab (23) made of silicone-coated fibreglass material which projects from the other shell element (18,19) beyond the lateral edge, wherein the joint tabs (15,23) are formed from silicone-coated fibreglass material.

8. Insulation according to any one of claims 1 to 7, characterised in that the friction layer (12,13), the inner skin (7,27), the outer skin (5,20) and preferably the insulating layer (14,32) also, are assembled from similar blank parts (40-57), wherein the blank parts (40-57) are sized and shaped so that a mounted shell element (1,2;18,19) composed of them runs substantially exactly along an external face, which has any desired shape, of a component part, and the end faces of the lateral edges run substantially normal to the region of the outer face situated beneath them.

9. Insulation according to any one of claims 1 to 7, characterised in that the shell elements (18,19) comprise an insulating bellows (21,28) for insulating a compensator (17) which extends along a compensator axis, which insulating bellows, in its installed state, extends beyond part of the periphery of the compensator and extends along the compensator axis substantially beyond the region of a compensator bellows and is spaced radially therefrom, wherein the fold region of the insulating bellows (21,28) is joined or sewn circumferentially on both sides to a fold-free end region, so that circumferentially-adjoining compensator shell elements (18,19) are seated against each other with flat sealing regions (25) and preferably can be joined by burred joints (23,24) which form a continuous closure in an axial direction.

10. Insulation according to claim 9, characterised in that along the compensator axis on at least one side, preferably on both sides, of the insulating bellows (21,28) the shell elements (18,19) comprise an unfolded end region which is spaced radially from the compensator (17), the stiffness of which end region is increased by a thicker silicone coating, preferably of at least 400 g/m², on at least the outer skin (20), optionally on the inner skin (27) also, which increased stiffness thereby ensures that longitudinal expansions do not result in deformations in an end region but are absorbed by the insulating bellows (21,28), wherein the silicone coating on at least the outer skin (20), and optionally also on the inner skin (27) of the insulating bellows (21,28) is preferably less than 145 g/m².

## Revendications

1. Isolation destinée à des surfaces extérieures d'éléments de structure et constituée à partir d'éléments formant coques (1, 2 ; 18, 19) pouvant être reliés les uns aux autres, et qui comprennent une enveloppe en un tissu de fibre de verre avec une peau intérieure et une peau extérieure (7, 5 ; 27, 20), une matière isolante (14, 32) mise sous forme de couche dans l'enveloppe et, au moins au niveau de deux bordures latérales, des éléments de soutien (10, 11 ; 30) indéformables, reliés à l'enveloppe et en forme de nervures, caractérisée en ce que les éléments formant coques (1, 2 ; 18, 19) comprennent, du côté de l'élément de structure, du moins par zonés, une couche de frottement (12, 13) en une matière plate, qui fait suite à la peau intérieure (7) et qui absorbe les frottements, la couche de frottement d'éléments formant coques (1, 2 ; 18, 19) à l'état monté s'appuyant contre des zones lisses de la surface extérieure de l'élément de structure, et pouvant ainsi recevoir à plat le frottement, provoqué par des vibrations, entre l'élément de structure et l'élément formant coque (1, 2 ; 18, 19).

2. Isolation selon la revendication 1, caractérisée en ce que la couche de frottement (12, 13) consiste en un acier au chrome et en ce qu'elle est, de préférence, réalisée par zones en tant que treillis en fils d'acier au chrome, notamment en tant que treillis en fils métalliques V4A, mais en ce qu'elle peut également, le cas échéant, être réalisée en tant que tôle d'acier au chrome, et en ce que les treillis en fils métalliques sont fixés, de préférence, à l'aide de crampons en acier, aux éléments de soutien (10, 11 ; 30), le cas échéant à l'aide de fils de fibre de verre, à la peau intérieure (7) et, notamment, à l'aide du soudage à la molette, au niveau de zones de tôles.

3. Isolation selon la revendication 1 ou 2, caractérisée en ce que la matière isolante sous forme de couche (14, 32) consistant en une matière en couche à fibres longues, qui n'agit pas de manière catalytique au contact avec une huile chaude de moteur, est, de préférence, constituée à partir de parties de nattes de fibres de silicate.

4. Isolation selon l'une des revendications 1 à 3, caractérisée en ce que le tissu de fibre de verre au moins de la peau intérieure (7), mais de préférence de la totalité de l'enveloppe, est entre-tissé de fils métalliques, de préférence de fils V4A, et/ou est revêtu, au moins sur une face, mais de préférence sur les deux faces, de silicone.

5. Isolation selon l'une des revendications 1 à 4, caractérisée en ce que les éléments de soutien (10, 11, 30), destinés à la stabilisation des éléments formant coques (1, 2 ; 18, 19) ainsi qu'à la transmission des forces entre éléments formant coques (1, 2 ; 18, 19) ou bien à la réception de forces axiales, consistent en une matière comprimée en fibres de silicate et/ou sont entourés par un tissu de fibre de verre et/ou en ce que, pour relier l'enveloppe aux éléments de soutien (10, 11, 30), des crampons d'acier sont introduits, à travers la peau de l'enveloppe, dans les éléments de soutien (10, 11, 30).

6. Isolation selon l'une des revendications 1 à 5, caractérisée en ce que, au niveau d'au moins une bordure latérale, au moins deux éléments de soutien (10, 11) sont séparés l'un de l'autre, parallèlement à la bordure, et de préférence transversalement à la bordure, par une zone d'enveloppe remplie de matière isolante, de manière à améliorer la stabilité, tandis que, notamment dans le cas d'éléments de structure présentant des zones du type rebords faisant saillie à partir de la surface principale de l'élément de structure, un élément extérieur de soutien (10) est adapté contre la zone en saillie et un élément intérieur de soutien (11) est adapté contre la surface principale.

7. Isolation selon l'une des revendications 1 à 6, caractérisée en ce qu'on prévoit, le long des bordures latérales, une liaison par accrochage à surfaces métalliques d'accrochage (16, 24), selon laquelle, dans les surfaces d'accrochage coopérant par paires, une surface d'accrochage (16) chaque fois dirigée vers l'extérieur est fixée contre la peau extérieure (5) d'un élément formant coque (1, 2), et une surface d'accrochage (24) dirigée vers l'intérieur est fixée à un autre élément formant coque (18, 19), par l'intermédiaire de pattes de raccordement (23) dépassant de la bordure latérale, l'assemblage pouvant également être effectué par couture, les pattes de raccordement (15, 23) étant constituées à partir d'un tissu de fibre de verre revêtu de silicone.

8. Isolation selon l'une des revendications 1 à 7, caractérisée en ce que la couche de frottement (12, 13), la peau intérieure (7, 27), la peau extérieure (5, 20) et, de préférence, également la couche isolante (14, 32) sont assemblées à partir de pièces découpées (40 à 57) semblables, les pièces découpées (40 à 57) étant dimensionnées et configurées de telle manière qu'un élément formant coque (1, 2 ; 18, 19) monté et constitué à partir de ces pièces, puisse s'étendre d'une manière sensiblement précise le long d'une surface extérieure, d'une forme quelconque, d'un élément de structure, et que les faces des bordures latérales s'étendent de manière sensiblement normale à la zone, située au-dessous, de la surface extérieure.

9. Isolation selon l'une des revendications 1 à 7, caractérisée en ce que les éléments formant coques (18, 19) destinés à isoler un compensateur de dilatation (17) s'étendant le long d'un axe de compensateur, comprennent un soufflet isolant (21, 28) qui, à l'état monté, s'étend sur une partie de la périphérie du compensateur de dilatation et le long de l'axe de compensateur, sensiblement sur la zone d'un soufflet compensateur de dilatation et en étant radialement espacé de celui-ci, la zone des plis du soufflet isolant (21, 28) étant reliée, ou bien cousue, des deux côtés, dans le sens de la périphérie, à une zone terminale sans plis, de telle manière que des éléments formant coques (18, 19) pour compensateur de dilatation, se faisant suite dans le sens de la périphérie, portent les uns contre les autres par des zones plates d'étanchéité (25) et sont, de préférence adaptés à, être reliés par des liaisons par accrochage (23, 24) assurant la fermeture continue dans le sens axial.

10. Isolation selon la revendication 9, caractérisée en ce que les éléments formant coques (18, 19) comprennent, le long de l'axe de compensateur, du moins sur un côté et, de préférence, sur les deux côtés du soufflet isolant (21, 28), une zone terminale sans plis et radialement espacée du compensateur de dilatation (17), et dont la rigidité est augmentée par un revêtement de silicone plus épais, de préférence d'au moins 400 gr/m², au moins de la peau extérieure (20), mais le cas échéant également de la peau intérieure (27), pour garantir ainsi que des dilatations thermiques en longueur ne puissent pas provoquer de déformations dans une zone terminale, mais qu'au contraire elles soient prises en charge par le soufflet isolant (21, 28) , le revêtement de silicone, au moins de la peau extérieure (20), mais le cas échéant, également de la peau intérieure (27) du soufflet isolant (21, 28) étant de préférence inférieur à 145 gr/m².
